# EUROPÄISCHE PATENTSCHRIFT

(11) **EP 1 391 637 B1**
(45) Veröffentlichungstag und Bekanntmachung des Hinweises auf die Patenterteilung: **31.10.2007**
(21) Anmeldenummer: 03018857.7
(22) Anmeldetag: 19.08.2003
(51) Int. Cl.: F16H 55/14, F16H 55/18

(54) **Zahnradanordnung**
Gear arrangement
Arrangement d'engrenages

(30) Priorität: 23.08.2002 DE 10239577
(43) Veröffentlichungstag der Anmeldung: 25.02.2004
(73) Patentinhaber: IMS Gear GmbH, 78166 Donaueschingen (DE)
(72) Erfinder: Thoma, Helmut, 79843 Löffingen (DE)
(74) Vertreter: Patentanwälte Westphal, Mussgnug & Partner

(56) Entgegenhaltungen:
- DE-A1- 1 961 982
- DE-A1- 2 602 152
- DE-A1- 3 328 145
- PATENT ABSTRACTS OF JAPAN Bd. 008, Nr. 238 (M-335), 31. Oktober 1984 (1984-10-31) & JP 59 117951 A (HITACHI SEISAKUSHO KK), 7. Juli 1984 (1984-07-07)

## Beschreibung

Die Erfindung betrifft eine Zahnradanordnung gemäß den Merkmalen des Oberbegriffs des Anspruchs 1.

Eine solche Zahnradausordnung ist z. B. aus DE-A-1961982 bekannt. Die dortige Zahnradkombination sieht Zahnräder vor, die auf einer gemeinsamen Welle rotieren, wobei die Zähne eines Zahnrads Seite an Seite zu den Zähnen eines anderen Zahnrads angeordnet sind. Dabei besteht das etwas größere Zahnrad aus Kunststoff und das etwas kleiner Zahnrad aus Metall. Beide Zahnräder sind feststehend und zueinander fixiert auf der Welle angeordnet, beispielsweise über eine sog. Nutenverkeilung.

Ähnliche Zahnradanordnungen sind aus DE 2602152 A1, DE 3 026 685 A1, DE 846 192 C und US 3 719 103 bekannt.

In Getrieben dienen ineinander greifende Zahnräder zur Kraft-und Drehmomentübertragung. Das Ineinandergreifen der Zähne der Zahnräder verursacht jedoch störende teilweise recht unangenehme laute Geräusche. Zur Geräuschdämpfung können die Zahnräder aus geeigneten Werkstoffen hergestellt werden, vorzugsweise aus Kunststoff. Eine weitere Geräuschreduktion lässt sich durch Schrägverzahnung der Zahnräder erzielen.

Zahnräder aus Kunststoff zeichnen sich zwar durch den Vorteil geringerer Geräusche aus, sind aber mit dem Nachteil einer geringeren Festigkeit behaftet, während Zahnräder aus Metall eine große Festigkeit zeigen, andererseits aber verhältnismäßig laute Geräusche erzeugen. Für die Zahnräder eines Getriebes versucht man daher einen Werkstoff zu finden, der nur geringe Geräusche erzeugt, aber trotzdem die geforderte Festigkeit erfüllt. Es ist daher stets ein Kompromiss erforderlich, bei welchem höhere Festigkeit stets mit lauteren Geräuschen verbunden ist.

Diese Kompromiss kann beispielsweise dadurch erreicht werden, dass anstelle eines einzigen Zahnrades eine Zahnradkombination aus zwei nebeneinander liegenden Zahnrädern ersetzt wird, bei denen das eine Zahnrad aus Kunststoff und das andere Zahnrad aus Metall besteht, wie es in den eingangs genannten Druckschriften offenbart ist.

Der DE 19 61 982 ist zu entnehmen, dass eine solche Zahnradkombination nicht nur integral ausgeführt werden kann, sondern auch getrennt.

Es ist daher Aufgabe der Erfindung, die bekannten Zahnradanordnungen mit Zahnrädern aus zwei verschiedenen Werkstoffen so weiterzubilden, dass sie sich weiter sowohl durch geringen Geräuschpegel als auch hohe Festigkeit, insbesondere eine hohe Überlastfestigkeit, auszeichnen, jedoch einfacher herzustellen sind und ein geringeres Beschädigungsrisiko aufweisen.

Diese Aufgabe wird durch eine Zahnradanordnung gemäß den Merkmalen des Anspruchs 1 gelöst.

Weiterbildungen der Erfindung sind Gegenstand der Unteransprüche.

Der wesentliche Aspekt der erfindungsgemäßen Zahnradanordnung besteht darin, dass die aus unterschiedlichem Material hergestellten Zahnräder lose auf der gemeinsamen Welle bzw. gemeinsamen Achse sitzen und somit ein Verrutschen der nebeneinander sitzenden Zahnräder in Drehrichtung der Zahnräder und zwar unabhängig voneinander möglich ist.

Bei den vorgenannten Zahnradkombinationen werden die Zahnräder aus unterschiedlichen Materialien dagegen fest auf der Welle fixiert oder mit Ihren zueinander zeigenden Oberflächen fixiert, beispielsweise aneinandergeklebt. Hierdurch ist ein Verrutschen der Zahnräder zueinander in Drehrichtung unmöglich. Durch die erfindungsgemäße lose Anordnung der Zahnräder auf der Welle ergibt sich jedoch im Lastfall ein unsymmetrische Ausrichtung der Verzahnungen zueinander. Die Elastizität des weicheren Zahnrades, z. B. dem, das aus Kunststoff hergestellt ist, kann für die Verformung über einen weiteren Bereich und auch sicherer genutzt werden als beim Stand der Technik, da der weichere Werkstoff nicht durch eine mechanische Verbindung mit dem festeren Zahnrad in seiner Verformung behindert wird. Dieser Sachverhalt erhöht die Dämpfungseigenschaften und minimiert das Beschädigungsrisiko. Dieses Beschädigungsrisiko ist jedoch bei den bekannten Zahnradskombinationen, bei denen die Zahnräder fest miteinander verbunden sind, groß, weil Spannungsrisse oder Kerbwirkungen an den Verbindungsstellen der fest miteinander verbundenen Zahnräder auftreten können. Sind die Zahnräder beim Stand der Technik mittels Passfedernuten aneinander befestigt, können diese Beschädigungen an diesen Passfedernuten auftreten.

Weiter vorteilhaft bei der erfindungsgemäßen Zahnradanordnung ist, dass das teure und aufwendige Verbindungstechniken der Zahnräder miteinander vermieden werden können, da diese nicht mehr notwendig sind. Damit kann aber die erfindungsgemäße Zahnradkombination auch dort eingesetzt werden, wo aus Platzgründen eine Verbindung der Zahnräder bisher nicht möglich war. Darüber hinaus entfällt bei der erfindungsgemäßen Anordnung eine präzise, radiale Ausrichtung der Verzahnungen zueinander.

Vorzugsweise sind die Zahnräder mit der größeren Elastizität aus Kunststoff hergestellt, während für die Zahnräder mit der größeren Festigkeit Metall als Werkstoff gewählt ist.

Ein Ausführungsbeispiel (hier nicht beansprucht) sieht vor, dass das zweite Zahnrad, also beispielsweise ein Metallzahnrad, eine geringfügig kleinere Verzahnung bei gleichem Modul aufweist als das erste Zahnrad, z. B. ein Kunststoffzahnrad. Bei normaler Belastung steht daher nur das erste Zahnrad aus Kunststoff im Eingriff mit einem anderen Zahnrad. Bei stärker werdender Last, z. B. bei einer Überlast, gibt das erste Zahnrad aus Kunststoff im elastischen Bereich nach, so dass auch das zweite Zahnrad aus Metall zum Eingriff kommt und die nun auftretenden hohen Kräfte auffangen kann. Dadurch ist das erste Zahnrad aus Kunststoff sicher vor Überlastung und Bruch geschützt.

Ein Ausführungsbeispiel der Erfindung sieht eine Kombination aus drei nebeneinander auf einer Welle liegenden Zahnräder vor, wobei die beiden äußeren Zahnräder die größere Elastizität aufweisen als das mittlere Zahnrad oder umgekehrt. Die äußeren Zahnräder sind vorzugsweise aus Kunststoff oder Metall hergestellt, während das mittlere Zahnrad aus Metall oder Kunststoff hergestellt ist.

Vorzugsweise sind die Zahnräder aller Ausführungsbeispiele schräg verzahnt. Die Zähne der nebeneinander liegenden Zahnräder können z.B. fluchten. Die nebeneinander angeordneten Zahnräder können aber auch geringfügig gegeneinander versetzt sein.

Bei normalem Betrieb ist der Geräuschpegel sehr gering, weil nur die Zahnräder aus Kunststoff miteinander im Eingriff sind. Bei hoher Last dagegen nimmt der Geräuschpegel etwas zu, weil nun auch das Zahnrad aus Metall im Eingriff mit einem anderen Zahnrad steht. Der Geräuschpegel ist daher ein Maß für die Belastung der Zahnräder und kann daher für Messzwecke ausgenutzt werden. Beispielsweise kann ein umgeeichter akustischer Pegelmesser die Belastung der Zahnräder anzeigen.

Die Erfindung wird anhand der Figuren nun näher beschrieben und erläutert.

In der Zeichnung zeigen:
- Fig. 1: eine perspektivische Ansicht eines ersten Ausführungsbeispieles (nicht beaunsprucht),
- Fig. 2: einen vergrößerten Ausschnitt aus der Figur 1,
- Fig. 3: eine unsymmetrische Ausrichtung der Zahnräder im Ausführungsbeispiel von Fig. 1 und
- Fig. 4: ein Ausführungsbeispiel der Erfindung in Seitenansicht.

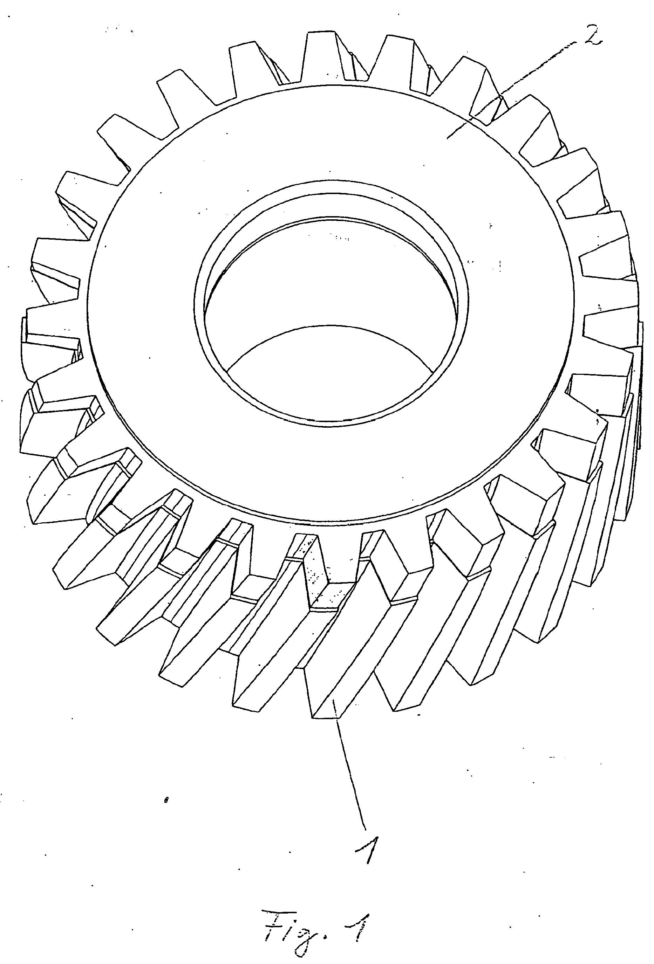

In Figur 1 ist ein Ausführungsbeispiel einer Zahnradanordnung abgebildet.

Ein erstes Zahnrad 1 ist unmittelbar neben einem zweiten Zahnrad 2 angeordnet. Das erste Zahnrad 1 ist vorzugsweise aus Kunststoff hergestellt, während das zweite Zahnrad 2 aus Metall gefertigt ist. In der Figur 1 ist deutlich zu erkennen, dass das zweite Zahnrad aus Metall eine geringfügig kleinere Verzahnung bei gleichem Modul aufweist als das erste Zahnrad 1 aus Kunststoff. Der Übersichtlichkeit wegen ist die Welle, auf welcher die Zahnräder 1 und 2 sitzen nicht gezeichnet.

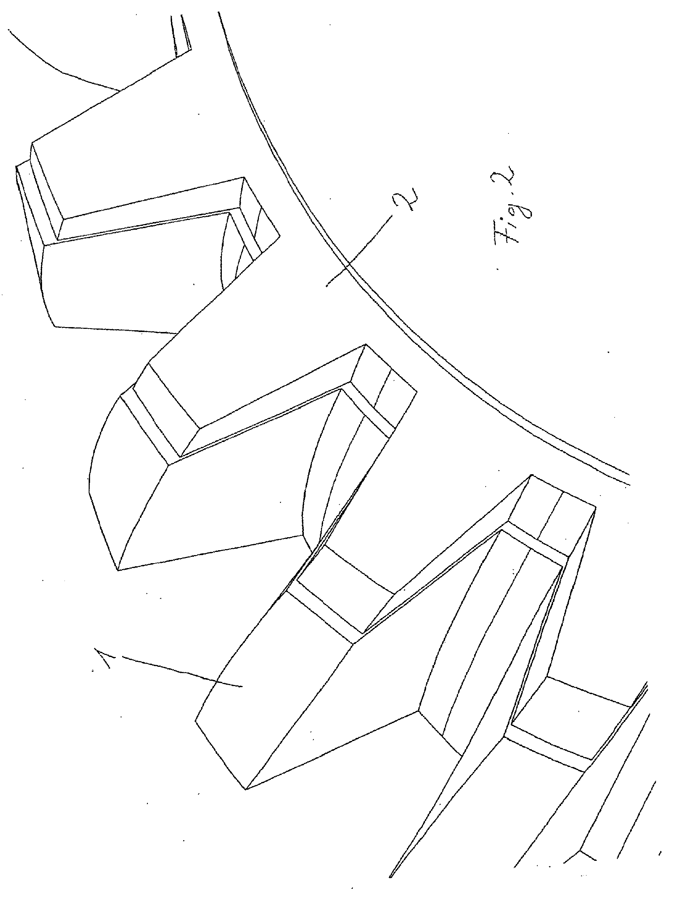

Figur 2 zeigt einen vergrößerten Ausschnitt aus Figur 1, in welchem die unterschiedliche Verzahnung der beiden Zahnräder 1 und 2 hervorgehoben ist. Es ist deutlich zu erkennen, dass das zweite Zahnrad 2 aus Metall erst zum Eingriff kommt, wenn das erste Zahnrad 1 aus Kunststoff im elastischen Bereich nachgibt.

Vorzugsweise ist die Dicke des ersten Zahnrades 1 aus Kunststoff größer gewählt als die des zweiten aus Metall.

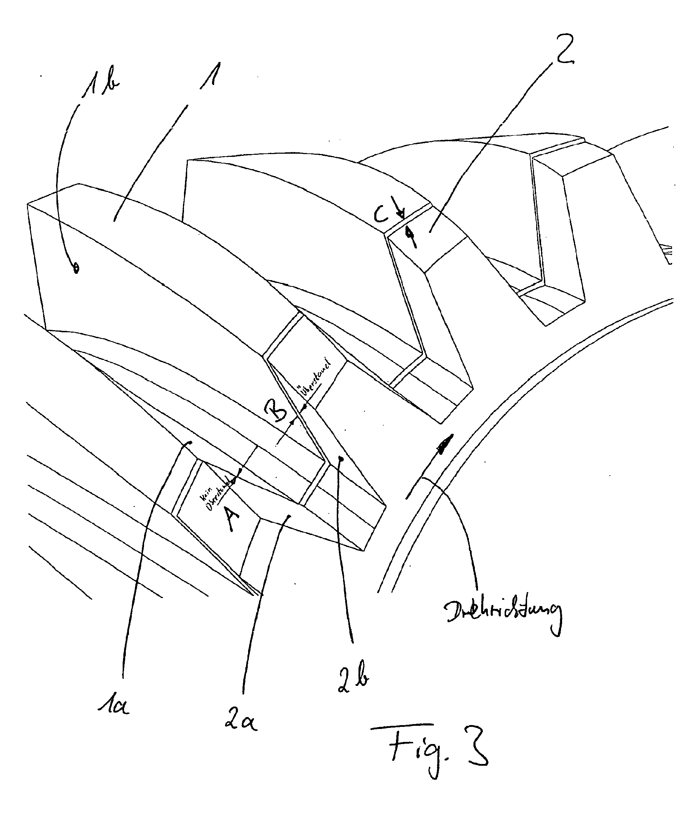

Wie auf Fig. 3 deutlich zu erkennen ist, können sich die Zahnräder 1 und 2 aufgrund Ihrer losen Anordnung auf der Welle zueinander unabhängig verdrehen. Im Lastfall führt dies dazu, dass sich die vorderen Seiten der beiden Zahnräder 1, 2 zueinander ausrichten und kein Überstand A entsteht. Die vorderen Flächen 1a und 2a der Zahnräder 1 und 2 fluchten zueinander. Auf der Rückseite der beiden Zahnräder 1, 2, also auf der zur Drehrichtung abgewandten Seite der Zahnräder 1, 2 bildet sich dagegen ein Überstand B am Übergang von der Rückseite 1b des ersten Zahnrades 1 zu der Rückseite 2b des zweiten Zahnrades 2. Wie auf Fig. 3 erneut deutlich zu erkennen ist, ist die Zahnhöhe des zweiten Zahnrades 2 geringfügig um eine Strecke C kleiner als die Zahnhöhe des ersten Zahnrads 1.

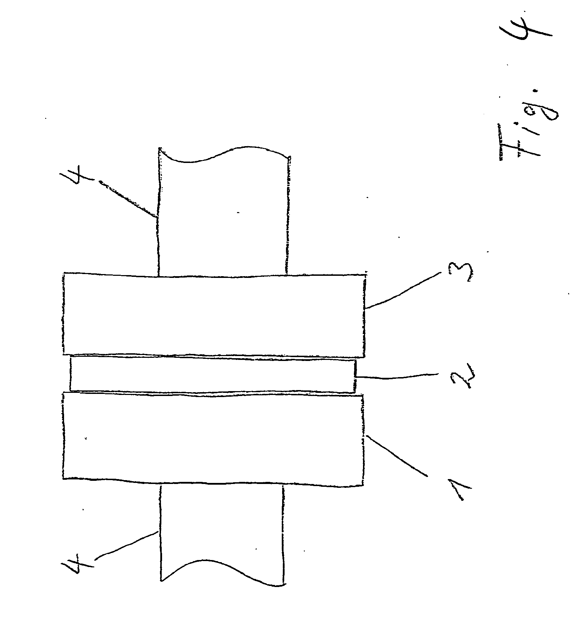

In Figur 4 ist ein Ausführungsbeispiel der Erfindung in Seitenansicht dargestellt.

Ein erstes Zahnrad 1, ein zweites Zahnrad 2 sowie ein drittes Zahnrad 3 sitzen lose oder fest auf einer gemeinsamen Welle 4. Die Elastizität des ersten und des dritten Zahnrades 1 und 3 ist größer oder kleiner gewählt als die des zweiten Zahnrades 2, dessen Festigkeit größer oder kleiner gewählt ist als die Festigkeit der beiden äußeren Zahnräder 1 und 3. Das erste Zahnrad 1 und das dritte Zahnrad 3 sind vorzugsweise aus Kunststoff oder Metall hergestellt, während für das mittlere Zahnrad 2 Metall oder Kunststoff als Werkstoff vorgesehen ist. Wie bei den vorangehenden Ausführungsbeispielen ist die Verzahnung des mittleren Zahnrades 2 aus Metall bei gleichem Modul geringfügig kleiner gewählt als bei den beiden äußeren Zahnrädern 1 und 3 aus Kunststoff. Es kann aber auch das mittlere Zahnrad 2 aus Kunststoff gefertigt sein, während die beiden äußeren Zahnräder 1 und 3 aus Metall hergestellt sind. In diesem Fall ist die Verzahnung der beiden äußeren Zahnräder 1 und 3 bei gleichem Modul geringfügig kleiner gewählt als beim mittleren Zahnrad 2. Vorzugsweise sind die Zahnräder 1, 2 und 3 schräg verzahnt.

Die erfindungsgemäße Zahnradanordnung ist allgemein für Getriebe geeignet, z. B. für Planetengetriebe. Getriebe mit der erfindungsgemäßen Zahnradanordnung zeichnen sich durch einen geringen Geräuschpegel und einen hohen Überlastschutz aus.

### Bezugszeichenliste

- 1: erstes Zahnrad
- 2: zweites Zahnrad
- 3: drittes Zahnrad
- 4: Welle

## Patentansprüche

1. Zahnradanordnung, wobei ein erstes Zahnrad (1) aus einem ersten Werkstoff und ein zweites Zahnrad (2) aus einem zweiten Werkstoff nebeneinanderliegend auf einer gemeinsamen Welle (4) sitzen, und wobei die Elastizität des ersten Zahnrades (1) größer gewählt ist als die des zweiten Zahnrades (2), während die Festigkeit des zweiten Zahnrades (2) größer gewählt ist als die des ersten Zahnrades (1), wobei das erste Zahnrad (1) und das zweite Zahnrad (2) auf der Welle sitzen,
**dadurch gekennzeichnet, dass** ein drittes Zahnrad (3) aus dem gleichen Werkstoff wie das erste Zahnrad (1) lose auf der gemeinsamen Welle (4) sitzt und zwar auf der noch freien Seite des zweiten Zahnrades (2).

2. Zahnradanordnung nach Anspruch 1,
**dadurch gekennzeichnet, dass** die Zahnräder mit der größeren Elastizität aus Kunststoff gefertigt sind, während die Zahnräder mit der kleineren Elastizität aber größeren Festigkeit aus Metall gefertigt sind.

3. Zahnradanordnung nach Anspruch 1 oder 2,
**dadurch gekennzeichnet, dass** die Zahnräder mit der größeren Festigkeit bei gleichem Modul eine geringfügig kleinere Verzahnung aufweisen als die Zahnräder mit der größeren Elastizität.

4. Zahnradanordnung nach einem der Ansprüche 1 bis 3,
**dadurch gekennzeichnet, dass** die Zähne der nebeneinander angeordneten Zahnräder (1, 2, 3) fluchten.

5. Zahnradanordnung nach einem der Ansprüche 1 bis 4,
**dadurch gekennzeichnet, dass** die nebeneinander angeordneten Zahnräder (1, 2, 3) geringfügig gegeneinander versetzt sind.

6. Zahnradanordnung nach einem der Ansprüche 1 bis 5,
**dadurch gekennzeichnet, dass** die Zahnräder (1, 2, 3) schräg verzahnt sind.

7. Zahnradanordnung nach einem der Ansprüche 1 bis 6,
**dadurch gekennzeichnet, dass** das erste Zahnrad (1) und das zweite Zahnrad (2) zueinander verdrehbar um deren jeweiligen Achsen auf der gemeinsamen Welle (4) sitzen.

8. Zahnradanordnung nach einem der Ansprüche 1 bis 7,
**dadurch gekennzeichnet, dass** das erste Zahnrad (1) und das zweite Zahnrad (2) an ihren zueinander zeigenden Oberflächen nicht miteinander verbunden sind.

9. Zahnradanordnung nach einem der Ansprüche 1 bis 8,
**dadurch gekennzeichnet, dass** das erste Zahnrad (1) und das zweite Zahnrad (2) bezüglich Ihrer Verzahnung unsymmetrisch zueinander ausrichtbar sind.

## Claims

1. Gear wheel arrangement, wherein a first gear wheel (1) of a first material and a second gear wheel (2) of a second material are located next to each other on a common shaft (4), and wherein the elasticity of the first gear wheel (1) is greater than that of the second gear wheel (2), while the strength of the second gear wheel (2) is greater than that of the first gear wheel (1), the first gear wheel (1) and the second gear wheel (2) being located on the shaft, **characterized in that** a third gear wheel (3) of the same material as the first gear wheel (1) is loosely located on the common shaft (4) and, to be precise, on the still free side of the second gear wheel (2).

2. Gear wheel arrangement according to claim 1, **characterized in that** the gear wheels with greater elasticity are made of plastic, while the gear wheels, with less elasticity but greater strength, are made of metal.

3. Gear wheel arrangement according to claim 1 or 2, **characterized in that** the gear wheels with greater strength, in the case of same module, have slightly fewer teeth than the gear wheels with greater elasticity.

4. Gear wheel arrangement according to anyone of claims 1 to 3, **characterized in that** the teeth of the gear wheels (1, 2, 3), arranged next to each other, are aligned.

5. Gear wheel arrangement according to anyone of claims 1 to 4, **characterized in that** the gear wheels (1, 2, 3), arranged next to each other, are slightly offset to each other.

6. Gear wheel arrangement according to anyone of claims 1 to 5, **characterized in that** the gear wheels (1, 2, 3) have diagonal teeth.

7. Gear wheel arrangement according to anyone of claims 1 to 6, **characterized in that** the first gear wheel (1) and the second gear wheel (2) are located so as to be able rotate about their respective axes, independently of each other, on the common shaft (4).

8. Gear wheel arrangement according to anyone of claims 1 to 7, **characterized in that** the first gear wheel (1) and the second gear wheel (2), on their surfaces facing each other, are not connected to one another.

9. Gear wheel arrangement according to anyone of claims 1 to 8, **characterized in that** the first gear wheel (1) and the second gear wheel (2), with regard to their teeth, can be arranged asymmetrically to each other.

## Revendications

1. Dispositif d'engrenages dans lequel un premier pignon denté (1) en une première matière et un second pignon denté (2) en une seconde matière sont juxtaposés sur un arbre commun (4) et l'élasticité du premier pignon denté (1) est supérieure à celle du second pignon denté (2) alors que la résistance mécanique du second pignon denté (2) est supérieure à celle du premier pignon denté(1), le premier pignon denté (1) et le second pignon denté (2) sont installés sur l'arbre,
**caractérisé par**
un troisième pignon denté (3) dans la même matière que le premier pignon denté (1) installé librement sur l'arbre commun (4) et cela sur le côté libre du second pignon denté (2).

2. Dispositif d'engrenages selon la revendication 1,
**caractérisé en ce que**
les pignons dentés de grande élasticité sont fabriqués en matière plastique alors que les pignons dentés d'élasticité plus faible mais de plus grande résistance mécanique sont fabriqués en métal.

3. Dispositif d'engrenages selon l'une des revendications 1 ou 2,
**caractérisé en ce que**
les pignons dentés de plus grande résistance mécanique pour le même module ont une denture légèrement plus petite que les pignons dentés de plus grande élasticité.

4. Dispositif d'engrenages selon l'une des revendications 1 à 3,
**caractérisé en ce que**
les pignons dentés juxtaposés (1, 2, 3) sont alignés.

5. Dispositif d'engrenages selon l'une des revendications 1 à 4,
**caractérisé en ce que**
les pignons dentés juxtaposés (1, 2, 3) sont légèrement décalés les uns par rapport aux autres.

6. Dispositif d'engrenages selon l'une des revendications 1 à 5,
**caractérisé en ce que**
les pignons dentés (1, 2, 3) ont une denture inclinée.

7. Dispositif d'engrenages selon l'une des revendications 1 à 6,
**caractérisé en ce que**
le premier pignon denté (1) et le second pignon denté (2) sont montés à rotation l'un par rapport à l'autre autour de l'axe respectif sur l'arbre commun (4).

8. Dispositif d'engrenages selon l'une des revendications 1 à 7,
**caractérisé en ce que**
le premier pignon denté (1) et le second pignon denté (2) ne sont pas reliés par leur surface tournée l'une vers l'autre.

9. Dispositif d'engrenages selon l'une des revendications 1 à 8,
**caractérisé en ce que**
le premier pignon denté (1) et le second pignon denté (2) sont alignés l'un par rapport à l'autre de manière asymétrique du point de vue de leur denture.
